# FASCICULE DE BREVET EUROPEEN

(11) **EP 4 517 210 B1**
(45) Date de publication et mention de la délivrance du brevet: **19.11.2025**
(21) Numéro de dépôt: 24172516.7
(22) Date de dépôt: 25.04.2024
(51) Int. Cl.: F24H 1/18, F24H 9/02, B29C 44/12, B29C 44/18, B29K 75/00

(54) **DISPOSITIF DE STOCKAGE D'EAU**
WASSERSPEICHERVORRICHTUNG
WATER STORAGE DEVICE

(30) Priorité: 28.08.2023 FR 2309023
(43) Date de publication de la demande: 05.03.2025
(73) Titulaire: Compagnie Industrielle des Chauffe-Eau, 68300 Saint-Louis (FR)
(72) Inventeur: BOURDIN, Yvan, 90110 SAINT-GERMAIN-LE-CHATELET (FR); CLAUSS, Mathieu, 90150 FOUSSEMAGNE (FR)
(74) Mandataire: Plasseraud IP

(56) Documents cités:
- EP-A2- 2 423 618
- EP-B1- 0 317 691
- EP-B1- 3 462 103
- FR-A1- 3 101 336

## Description

### Domaine technique

La présente invention se rapporte à un dispositif de stockage d'eau, notamment d'eau sanitaire, pour un système de chauffage d'eau.

### Technique antérieure

De nos jours, il est connu d'équiper une habitation d'un système pour chauffer l'eau sanitaire destinée à alimenter en eau chaude des points d'eau d'une habitation. Avantageusement, le système comprend un chauffe-eau positionné à l'intérieur de l'habitation, muni d'un réservoir d'eau et d'un logement de réception dudit réservoir d'eau.

De façon connue, le réservoir d'eau est isolé et maintenu dans le logement grâce à un moyen de solidarisation sous forme d'une mousse expansée qui fixe, par liaisons chimiques, le réservoir d'eau et les habillages.

Néanmoins, les liaisons chimiques créées peuvent ne pas suffire pour maintenir de façon satisfaisante le réservoir d'eau dans son logement. C'est notamment le cas lorsque la mousse est en polyuréthane et le logement en polypropylène.

Le document FR 3 101 336 A1 divulgue un dispositif de stockage d'eau selon le préambule de la revendication 1. Les documents EP 0 317 691 B1, EP 2 423 618 A2 et EP 3 462 103 B1 divulguent d'autres exemples de dispositifs de stockage avec isolation thermique.

Le but de l'invention est de remédier à cet inconvénient.

A cet effet, il est proposé un dispositif de stockage d'eau, notamment d'eau sanitaire, comportant un réservoir d'eau et un logement dudit réservoir d'eau, le logement comprenant un premier et un deuxième habillages d'extrémité, le premier habillage d'extrémité formant partie de fond du logement en position normale d'utilisation du dispositif de stockage d'eau et le deuxième habillage d'extrémité formant partie sommitale du logement en position normale d'utilisation du dispositif de stockage d'eau, le dispositif de stockage d'eau comprenant un moyen de solidarisation du réservoir d'eau au logement, le moyen de solidarisation étant une mousse, de préférence en polyuréthane, l'habillage formant partie sommitale étant réalisé en matériau présentant une énergie de surface inférieure à une tension superficielle de ladite mousse et comprenant au moins une languette munie d'une surface d'accroche de ladite mousse de solidarisation.

Selon un autre aspect, l'habillage formant partie sommitale comprend quatre languettes d'accroche de la mousse.

Selon un autre aspect, l'une des languettes au moins comprend un élément de rigidification.

Selon un autre aspect, la surface d'accroche est disposée horizontalement en position d'utilisation du système de chauffage.

Selon un autre aspect, l'élément de rigidification comprend une bande inclinée par rapport à la surface d'accroche.

Selon un autre aspect, l'élément de rigidification présente une section en forme de vague.

Selon un autre aspect, l'habillage formant partie sommitale est réalisé en polypropylène ou en téflon.

Selon un autre aspect, la mousse de solidarisation est en polyuréthane.

Selon un autre aspect, l'habillage formant partie de fond comprend au moins une languette munie d'une surface d'accroche de ladite mousse de solidarisation.

L'invention a également pour objet un système de chauffage d'eau comprenant un chauffe-eau muni d'un dispositif de stockage d'eau tel que décrit précédemment.

### Brève description des dessins

D'autres caractéristiques, détails et avantages apparaîtront à la lecture de la description détaillée ci-après, et à l'analyse des dessins annexés, sur lesquels :
**Fig. 1**

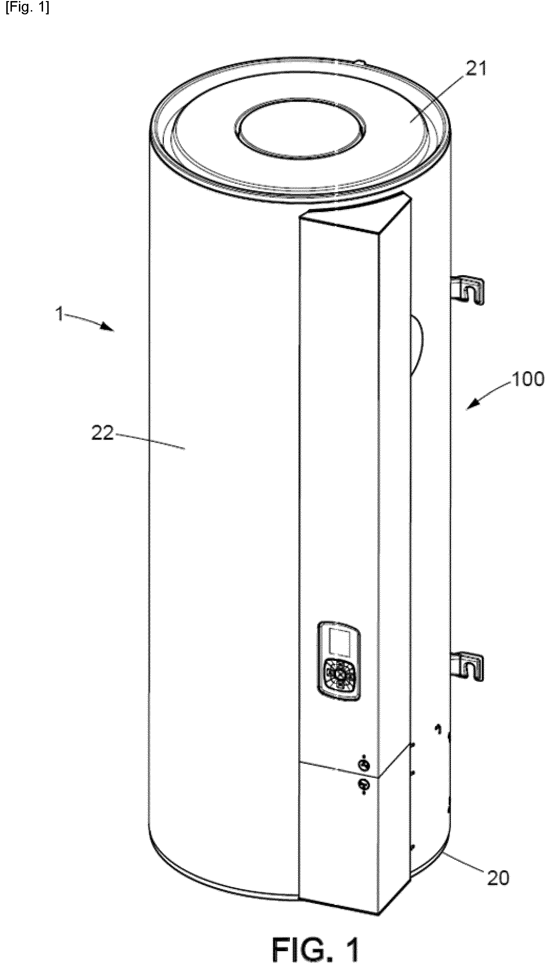

   [Fig. 1] montre une vue en perspective d'un système de chauffage d'eau selon un mode de réalisation.
**Fig. 2**

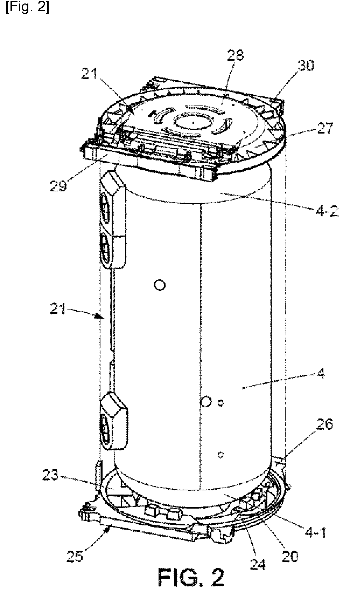

   [Fig. 2] montre une vue en perspective du chauffe-eau de la figure 1, par transparence d'un habillage latéral.
**Fig. 3**

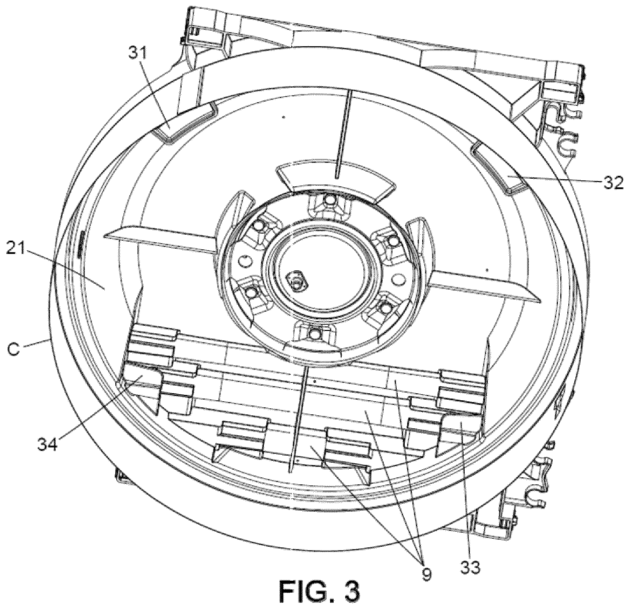

   [Fig. 3] montre une vue en perspective d'un habillage du système de chauffage de la figure 2.
**Fig. 4**

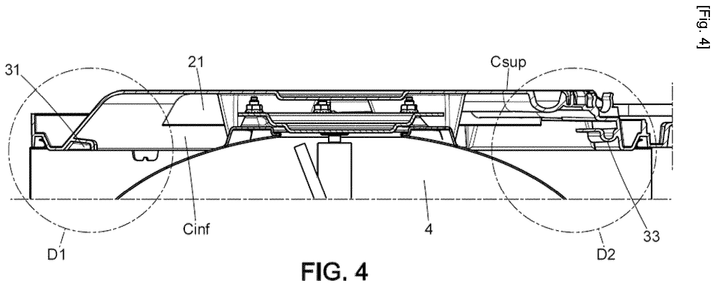

   [Fig. 4] montre une vue en perspective tronquée de l'habillage de la figure 2.
**Fig. 5**

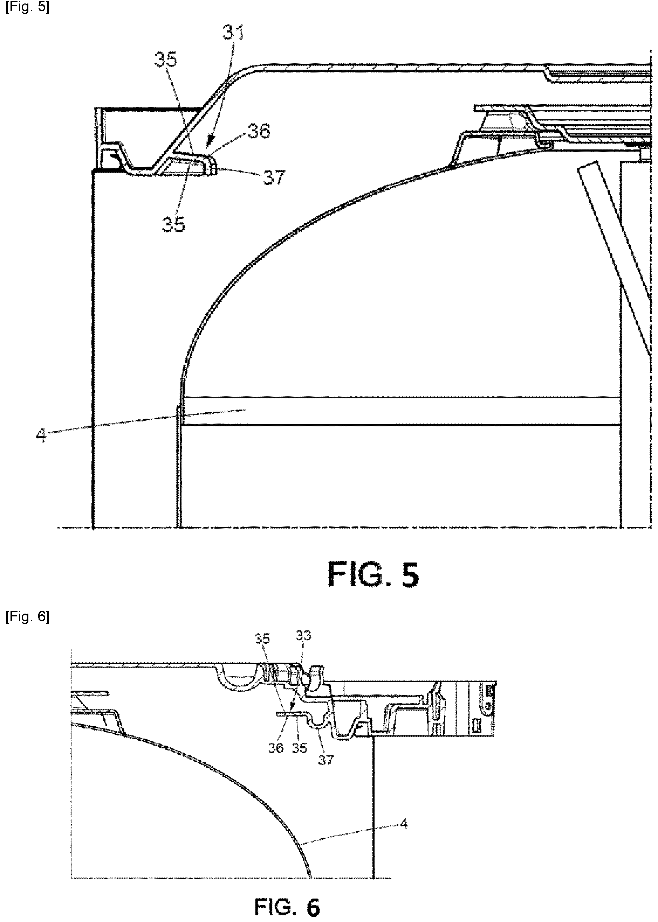

   [Fig. 5] montre une vue d'une coupe d'un détail D1 de l'habillage de la figure 4.
**Fig. 6**
   [Fig. 6] montre une d'une coupe d'un détail D2 de l'habillage de la figure 4.

### Description des modes de réalisation

Comme il ressort des figures, l'invention a pour objet un dispositif de stockage d'eau, notamment d'eau sanitaire, référencé 1. Un tel dispositif de stockage peut être soit isolé soit par exemple inclus dans un système de chauffage d'eau, référencé 100, comme c'est le cas dans les figures 1 à 6. L'eau chauffée est alors destinée à alimenter un réseau de conduits d'une habitation.

On note que, sur les figures, le système 100 est illustré dans une position de service, encore appelée position normale d'utilisation, qui correspond à une position dans laquelle le système 100 est prêt à fonctionner, par exemple disposé dans ou aux alentours de l'habitation, de préférence dans un local abrité.

Le dispositif de stockage 1 comprend un logement 2 conformé pour recevoir un réservoir d'eau 4 et le réservoir d'eau 4 lui-même.

Le logement 2 est délimité par un premier et un deuxième habillages d'extrémité, 20, 21 ainsi qu'un troisième habillage 22, détaillés ci-après.

Les habillages d'extrémité 20, 21 se font face et sont disposés de part et d'autre de l'habillage 22.

L'habillage 20 assure le support du réservoir d'eau 4 dans le logement 2. En position de service du système 100, l'habillage 20 est disposé sous le réservoir d'eau 4. On parlera par la suite indifféremment d'habillage inférieur ou d'habillage de support.

L'habillage de support 20 comprend une plaque 23 disposée horizontalement en position de service du système 100. La plaque 23 comprend une partie centrale 24 de la forme d'un cylindre plat, et deux bords rectilignes opposés 25, 26 solidaires tangentiellement de la partie centrale 24. La plaque 23 forme le fond du logement 2, le fond 4-1 du réservoir d'eau 4 reposant au centre de la partie centrale 24.

En position de service, l'habillage 21 est disposé au-dessus du réservoir d'eau 4. On parlera par la suite d'habillage supérieur.

L'habillage supérieur 21 comprend une plaque 27 disposée horizontalement en position de service du système 100. La plaque 27 comprend une partie centrale 28 de la forme d'un cylindre plat, et deux bords rectilignes opposés 29, 30 solidaires tangentiellement de la partie centrale 27. La plaque 27 forme le sommet du compartiment 11, le sommet 4-2 du réservoir d'eau 4 reposant au centre de la partie 27 (voir figure 4).

La plaque 27 est délimitée par deux côtés opposés, un côté inférieur Cinf et un côté supérieur Csup. Le sommet 4-2 du réservoir 4 est solidaire du côté inférieur Cinf. Au moins l'évaporateur 6, le compresseur 7, le ventilateur 8, les conduits 9 sont montés sur le côté supérieur Csup qui forme le socle du compartiment pompe à chaleur 10.

Comme il ressort de la figure 2, l'habillage 20 et l'habillage 21 sont superposés l'un à l'autre, le bord 25, 26 faisant face au bord 29, 30, respectivement. Le réservoir d'eau 4 s'étend entre les habillages 20 et 21.

L'habillage 22 est un habillage, préférentiellement en tôle, muni d'une paroi longitudinale s'étendant entre l'habillage de support 20 et l'habillage supérieur 21.

Pour fixer le réservoir d'eau 4 dans le logement 2, le dispositif 1 comprend un moyen de solidarisation, sous forme de mousse, de préférence en polyuréthane. La mousse est introduite sous forme liquide dans le logement où elle s'expanse et solidarise, par collage chimique, le réservoir d'eau 4 à chacun des habillages 20, 21 et 22.

La mousse est de préférence en polyuréthane.

Néanmoins, dans le cadre de l'invention, le matériau de l'habillage 21 présente énergie de surface inférieure à la tension de surface de la mousse, ce qui rend insuffisant le collage chimique. En d'autres termes, l'habillage 21 présente de faibles propriétés d'adhérence par rapport à la mousse utilisée, ce qui rend extrêmement voire impossible de rendre solidaire l'ensemble.

Par exemple, l'habillage 21 peut être en téflon. Avantageusement, l'habillage 21 est en polystyrène.

Le collage chimique étant insuffisant, l'habillage 21 comprend des éléments d'accroche mécanique de la mousse, comme il va être maintenant détaillé

Comme visible sur les figures 3 à 6, l'habillage 21 comprend au moins une languette.

On note que, de préférence, l'habillage 21 est complètement réalisé en polypropylène et chaque languette vient de matière avec l'habillage 21. Néanmoins, l'invention n'est pas limitée à cette configuration, et chaque languette peut être réalisée en un matériau autre que le polypropylène.

Sur le mode de réalisation illustré, l'habillage 21 comprend quatre languettes, référencées 31, 32, 33 et 34.

Chacune des languettes 31 à 34 comprend au moins une surface 35 pour une accroche mécanique de la mousse lorsque la languette est noyée dans la mousse. Chaque surface d'accroche 35 assure un renforcement de la solidarisation du réservoir d'eau 4 à l'habillage 21 via la mousse et ce, même si le collage chimique entre l'habillage en propylène et la mousse en polyuréthane ou en polypropylène chargé en fibres n'est pas suffisant.

Comme il apparaît sur la figure 3, les languettes 31 et 32 sont identiques et diffèrent des languettes 33 et 34, elles-mêmes identiques. Les languettes 31 et 32 sont disposées dans une zone moins contrainte spatialement que les languettes 33 et 34, positionnées dans une zone de conduits 9 du dispositif de pompe à chaleur 2.

En référence plus particulièrement aux figures 4 à 6, chacune des languettes 31, 32 présente, dans une coupe selon un plan (Y, Z), une première section 36 qui fait saillie vers l'intérieur d'un contour C du cylindre plat de la plaque centrale 27. La section 36 est horizontale ou inclinée d'un angle inférieur à 20°, de préférence inférieur à 10°, avec une direction horizontale. Chacune des languettes 31, 32 comprend également une deuxième section 37 solidaire par l'une de ses extrémités de la première section 36 et libre par l'autre de ses extrémités. La section 37 est inclinée d'au moins 45°, préférentiellement de 90° (c'est-à-dire qu'elle est verticale) par rapport à la section 36.

Chacune des sections 36, 37 délimite deux surfaces 35 opposées d'accroche de la mousse.

A minima, chacune des languettes 36, 37 comprend la première section 36. La section 37 est une nervure de rigidification de la languette 31, 32, contre tout risque d'arrachement, notamment, lorsque le système 100 est déplacé, en augmentant l'inertie de la languette.

On note que, lorsque la mousse est introduite, elle noie les languettes 31, 32 et se fixe aux sections 36 et 37 de chacune des languettes 31, 32.

En référence plus particulièrement aux figures 4, 5 chacune des languettes 33, 34 présente, dans une coupe selon un plan (Y, Z), une première section 37, en forme de U, qui fait saillie vers l'intérieur du contour C du cylindre plat de la plaque centrale 27. Chacune des languettes 33, 34 comprend également une deuxième section 36 solidaire par l'une de ses extrémités de la première section 37 et libre par l'autre de ses extrémités. La deuxième section 36 est disposée horizontalement.

A minima, chacune des languettes 33, 34 comprend la première section 37. La section 37 est une nervure de rigidification de la languette 31, 32, contre tout risque d'arrachement, notamment, lorsque le dispositif 1 est déplacé, en augmentant l'inertie de la languette. La forme en U s'accommode de la zone spatialement contrainte des languettes 33, 34.

On note que, lorsque la mousse est introduite, elle noie les languettes 33, 34 et se fixe aux sections 36 et 37 de chacune des languettes 33, 34.

Les languettes 31, 32, 33 et 34 sont disposées chacune à proximité des coins externes du logement, sensiblement parallélépipédique L, car les coins sont des zones de plus grandes sollicitations mécaniques et mettre les languettes à proche distance assure une réduction du bras de levier.

On note que la languette 31 et la languette 33 sont diamétralement opposées. De même, la languette 32 et la languette 34 sont diamétralement opposées.

On note également que l'habillage 20 peut également être muni d'au moins une languette, de préférence quatre languettes, d'accroche de la mousse.

Ainsi, grâce aux languettes selon la présente invention, le réservoir 4 est fermement maintenu par la mousse.

Lorsque le dispositif de stockage d'eau 1 est inclus dans un système de chauffage 100, le dispositif 1 est alors un chauffe-eau. Il s'agit soit d'un chauffe-eau électrique, auquel cas le dispositif est muni d'au moins une résistance électrique pour chauffer l'eau dans le réservoir 2, soit d'un chauffe-eau thermodynamique.

Dans ce cas, l'eau est chauffée par un condenseur d'un dispositif de pompe à chaleur 2 du système 100. Le condenseur se présente sous forme d'un serpentin disposé autour du réservoir d'eau 4. Le dispositif de pompe à chaleur comprend, en surplus du condenseur, un évaporateur, un compresseur, et un détendeur formant une boucle thermodynamique. Le dispositif de pompe à chaleur comprend avantageusement un ventilateur pour forcer un flux d'air dans l'évaporateur.

De façon connue, dans la boucle, le flux d'air décharge ses calories dans l'évaporateur, où circule le fluide frigorigène, tandis que le fluide frigorigène échange tout ou partie des calories qu'il contient dans le condenseur, ce qui réchauffe l'eau stockée dans le réservoir 4.

Comme il ressort de la description qui précède, l'invention s'applique à un dispositif de stockage d'eau, soit pris seul (ballon d'eau) soit faisant partie d'un chauffe-eau.

Selon l'invention, l'habillage inférieur 20 comprend une ou plusieurs languette(s) formant attache mécanique entre la mousse et l'habillage, ce qui est particulièrement intéressant lorsque le matériau de l'habillage 21 présente une énergie de surface inférieure à la tension superficielle de la mousse. C'est notamment le cas pour une mousse en polyuréthane, lorsque l'habillage 21 est en polypropylène.

On note que, de préférence, le logement 2 (c'est-à-dire les habillages d'extrémité 20, 21, et l'habillage longitudinal 22) est complètement en polypropylène.

Ainsi, grâce à l'accroche mécanique des languettes, le réservoir 4 est fermement maintenu dans le logement 2, même en cas de transport du dispositif de stockage d'eau 1.

On note que le nombre de languettes n'est pas limitatif et dépend notamment du procédé de fabrication du dispositif. Le nombre de quatre languettes a été sélectionné pour des raisons de moulage de la pièce.

## Revendications

1. Dispositif de stockage d'eau, notamment d'eau sanitaire, comportant un réservoir d'eau (4) et un logement (2) dudit réservoir d'eau (4), le logement (2) comprenant un premier et un deuxième habillages d'extrémité (20, 21), le premier habillage d'extrémité (20) formant partie de fond du logement (2) en position normale d'utilisation du dispositif de stockage d'eau (1) et le deuxième habillage d'extrémité formant partie sommitale du logement (2) en position normale d'utilisation du dispositif de stockage d'eau (1), le dispositif de stockage d'eau (1) comprenant un moyen de solidarisation du réservoir d'eau (4) au logement (2), le moyen de solidarisation étant une mousse, de préférence en polyuréthane, l'habillage formant partie sommitale (21) étant réalisé en matériau présentant une énergie de surface inférieure à une tension superficielle de ladite mousse et **caractérisé en ce que** l'habillage formant partie sommitale comprend au moins une languette munie d'une surface d'accroche (35) de ladite mousse de solidarisation.

2. Dispositif selon la revendication 1, dans lequel l'habillage formant partie sommitale (21) comprend quatre languettes (31, 32, 33, 34) d'accroche de la mousse.

3. Dispositif selon l'une des revendications précédentes, dans lequel l'une des languettes au moins comprend un élément de rigidification (37).

4. Dispositif selon l'une des revendications précédentes, dans lequel la surface d'accroche est disposée horizontalement en position d'utilisation du système de chauffage.

5. Dispositif selon la revendication précédente dans sa dépendance à la revendication 4, dans lequel l'élément de rigidification (37) comprend une bande inclinée par rapport à la surface d'accroche.

6. Dispositif selon la revendication 5 dans sa dépendance à la revendication 4, dans lequel l'élément de rigidification (37) présente une section en forme de vague.

7. Dispositif selon l'une des revendications précédentes, dans lequel l'habillage formant partie sommitale (21) est réalisé en polypropylène ou en téflon.

8. Dispositif selon l'une des revendications précédentes, dans lequel la mousse de solidarisation est en polyuréthane.

9. Dispositif selon l'une des revendications précédentes, dans lequel l'habillage formant partie de fond (20) comprend au moins une languette munie d'une surface d'accroche de ladite mousse de solidarisation.

10. Système de chauffage d'eau comprenant un chauffe-eau muni d'un dispositif de stockage d'eau selon l'une des revendications précédentes.

## Patentansprüche

1. Vorrichtung zur Speicherung von Wasser, insbesondere Brauchwasser, umfassend einen Wasserbehälter (4) und eine Aufnahme (2) für den Wasserbehälter (4), wobei die Aufnahme (2) eine erste und eine zweite Endverkleidung (20, 21) umfasst, wobei die erste Endverkleidung (20) in der normalen Gebrauchsposition der Wasserspeichervorrichtung (1) einen Teil des Bodens des Gehäuses (2) bildet und die zweite Endverkleidung in der normalen Gebrauchsposition der Wasserspeichervorrichtung (1) den oberen Teil des Gehäuses (2) bildet, wobei die Wasserspeichervorrichtung (1) ein Mittel zum Verbinden des Wasserbehälters (4) mit dem Gehäuse (2) umfasst, wobei das Verbindungsmittel ein Schaum, vorzugsweise aus Polyurethan, ist, wobei die den oberen Teil bildende Verkleidung (21) aus einem Material hergestellt ist, dessen Oberflächenenergie geringer ist als die Oberflächenspannung des Schaums, und **dadurch gekennzeichnet, dass** die den oberen Teil bildende Verkleidung wenigstens eine Lasche umfasst, die mit einer Haftfläche (35) für den Verbindungsschaum versehen ist.

2. Vorrichtung nach Anspruch 1, wobei die den oberen Teil bildende Verkleidung (21) vier Laschen (31, 32, 33, 34) zum Verankern des Schaums umfasst.

3. Vorrichtung nach einem der vorhergehenden Ansprüche, wobei wenigstens eine der Laschen ein Versteifungselement (37) umfasst.

4. Vorrichtung nach einem der vorhergehenden Ansprüche, wobei die Haftfläche in der Gebrauchsposition des Heizsystems horizontal angeordnet ist.

5. Vorrichtung nach dem vorhergehenden Anspruch in Abhängigkeit von Anspruch 4, wobei das Versteifungselement (37) einen gegenüber der Befestigungsfläche geneigten Streifen umfasst.

6. Vorrichtung nach Anspruch 5 in Abhängigkeit von Anspruch 4, wobei das Versteifungselement (37) einen wellenförmigen Querschnitt aufweist.

7. Vorrichtung nach einem der vorhergehenden Ansprüche, wobei die den oberen Teil bildende Verkleidung (21) aus Polypropylen oder Teflon ausgebildet ist.

8. Vorrichtung nach einem der vorhergehenden Ansprüche, wobei der Verbindungsschaum aus Polyurethan besteht.

9. Vorrichtung nach einem der vorhergehenden Ansprüche, wobei die den Teil des Bodens bildende Verkleidung (20) wenigstens eine Lasche mit einer Haftfläche für den Verbindungsschaum aufweist.

10. Wasserheizsystem, umfassend einen Warmwasserbereiter, der mit einer Wasserspeichervorrichtung nach einem der vorhergehenden Ansprüche versehen ist.

## Claims

1. A water storage device, in particular for sanitary water, comprising a water reservoir (4) and a housing (2) for said water reservoir (4), the housing (2) comprising a first and a second end trim (20, 21), the first end trim (20) forming a bottom part of the housing (2) in a normal position of use of the water storage device (1) and the second end trim forming a top part of the housing (2) in the normal position of use of the water storage device (1), the water storage device (1) comprising a means for securing the water reservoir (4) to the housing (2), the securing means being a foam, preferably of polyurethane, the top part-forming trim (21) being made of a material having a surface energy lower than a surface tension of said foam and **characterised in that** the top part-forming trim comprises at least one tab provided with a surface (35) for gripping said securing foam.

2. The device according to claim 1, wherein the top part-forming trim (21) comprises four tabs (31, 32, 33, 34) for gripping the foam.

3. The device according to one of the preceding claims, wherein at least one of the tabs comprises a rigidifying element (37).

4. The device according to one of the preceding claims, wherein the gripping surface is horizontally disposed in the position of use of the heating system.

5. The device according to the preceding claim when dependent on claim 4, wherein the rigidifying element (37) comprises a strip tilted relative to the gripping surface.

6. The device according to claim 5 when dependent on claim 4, wherein the rigidifying element (37) has a wave-shaped cross-section.

7. The device according to one of the preceding claims, wherein the top part-forming trim (21) is made of polypropylene or teflon.

8. The device according to one of the preceding claims, wherein the securing foam is of polyurethane.

9. The device according to one of the preceding claims, wherein the bottom part-forming trim (20) comprises at least one tab provided with a surface for gripping said securing foam.

10. A water heating system comprising a water heater fitted with a water storage device according to one of the preceding claims.
